# EUROPEAN PATENT APPLICATION

(11) **EP 2 641 474 A1**
(43) Date of publication of application: **25.09.2013**
(21) Application number: 12001948.4
(22) Date of filing: 20.03.2012
(51) Int. Cl.: A23D 7/00, A23D 9/00, A21D 2/16, A23L 1/30

(54) **High oleic palm oils**

(71) Applicant: Cargill Inc., Wayzata, MN 55391 (US)
(72) Inventor: Hollander, Frank, 4051 BL Ochten (NL)
(74) Representative: Dottridge, Cass A.C.

(57) **Abstract**

The invention relates to high oleic palm oils having a MUFA to PUFA ratio of 4 or more and to their use in food and/or beverage composition.

## Description

### FIELD OF THE INVENTION

The present invention relates to high oleic palm oils and to their use in food and beverage applications. In particular, it relates to the use of high oleic palm oils with a relatively high ratio of mono-unsaturated fatty acids (MUFAs) to polyunsaturated fatty acids (PUFAs).

### BACKGROUND OF THE INVENTION

Palm oil is an edible oil derived from the fruit of the palm tree *Elaeis guineensis.* Palm oil is naturally red in colour due to the presence of high concentrations of beta-carotene and is one of a limited number of vegetable fats with a relatively high content in saturated fats.

Palm oil has been used for a long time as a common cooking ingredient in Africa, Southeast Asia and parts of Brazil. Because of its low cost, it has also been adopted, more recently, by the commercial food industry in other parts of the world.

Palm oil is made up of different triglycerides, just like any other oil or fat. A triglyceride is composed of three fatty acids linked by a glycerol backbone. These fatty acids may be saturated (no double bonds on the carbon chain), monounsaturated (a single double bond) or polyunsaturated (more than one double bond). Typically, the main fatty acid constituents of palm oil are palmitic acid (C16:0), stearic acid (C18:0), oleic acid (C18:1) and linoleic acid (C18:2). As a result, palm oil is semi-solid at room temperature. This makes it unsuitable for use in certain applications, especially food and beverage applications, which require an oil with a lower melting point (i.e. which is liquid at room temperature).

As such, palm oil is often modified before use. In particular, it is often fractionated to separate its solid (stearin) and liquid (olein) fractions. In some instances, the olein fraction may be further fractionated to obtain a highly fluid super-olein. Unfortunately, refined palm oil oleins and super oleins both suffer from low oxidative stability due to a relatively high ratio of polyunsaturated fatty acids (PUFAs) to monounsaturated fatty acids (MUFAs). Lipid peroxidation (to which PUFAs are particularly vulnerable) results in rancidity and significantly reduces an oil's shelf-life. In frying oils, oxidation is an even greater concern as it will lead to the formation, during use at elevated temperatures, of undesirable polar compounds.

One solution to this has been to replace antioxidants lost during refining. Indeed, although crude palm oil products have relatively high levels of natural antioxidants, the normal refining process unfortunately results in a very large part of them being lost. These lost antioxidants can be replaced, after refining, with other antioxidants (such as butylated hydroxyanisole - BHA, butylated hydroxytoluene - BHT, tert-butylhydroquinone - TBHQ, tocopherol extracts, rosemary extracts, tea extracts, ascorbylpalmitate or lecithin). These replacement antioxidants, however, need to be labeled as additives on food packaging, and are thus becoming an increasingly unpopular option for food producers.

As such, there is still a need in the art to identify a palm oil which would have a sufficiently low melting point, i.e. which would be sufficiently liquid at room temperature, whilst still having acceptable oxidative stability - without the need for antioxidant additives.

### STATEMENTS OF THE INVENTION

According to a first aspect of the present invention, there is provided a food and/or beverage composition, such as a frying oil, comprising a refined high oleic palm oil having a MUFA to PUFA ratio of 4 or more, and/or any fractions or derivatives thereof, together with one or more additional ingredients.

According to another aspect of the present invention, there is provided the use of a refined high oleic palm oil having a MUFA to PUFA ratio of 4 or more, and/or any fractions or derivatives thereof, in the preparation of a food and/or beverage composition.

According to a further aspect of the present invention, there is provided the use of a refined high oleic palm oil having a MUFA to PUFA ratio of 4 or more, and/or any fractions or derivatives thereof, to increase the oxidative stability of a frying oil and/or to reduce the formation of polar compounds during frying.

### DETAILED DESCRIPTION

The present invention provides a food and/or beverage composition comprising a refined high oleic palm oil together with one or more additional ingredients. A "high oleic palm oil" is a palm oil which naturally (i.e. even without fractionation or modification) has a relatively high content of oleic acid compared to a regular palm oil (a particular example of such an oil would be the high oleic oil obtained from hybrids of Elaies guineensis and Elaies olifeira). Oleic acid is by far the main monounsaturated fatty acid (MUFA) in palm oil. As such, oleic acid content can also be expressed as MUFA content. Regular palm oil typically has a MUFA content of 36-39% by weight. Even olein fractions of regular palm oil will only have a MUFA content of 40-44% by weight. By contrast, the high oleic palm oils of the present will preferably have a MUFA content of at least 45% by weight. Advantageously, they will have a MUFA content of at least 50%, preferably at least 55% by weight. According to one embodiment, they will have a MUFA content of 45-65%, preferably of 50-60% by weight.

Critically, the high oleic palm oils used in accordance with the present invention will have a weight ratio of MUFAs to PUFAs (polyunsaturated fatty acids) of at least 4, preferably of at least 4.5. According to one embodiment, they will have a weight ratio of MUFAs to PUFAs of 4-5. They will preferably be characterized by a solid fat content (SFC) at 30°C of less than 5%, more preferably of less than 2% by weight. According to one embodiment, the SFC at 30°C will be less than 1%, more preferably less than 0.5% by weight. At 20°C, the SFC of the oil will preferably be less than 10%, more preferably of less than 5% by weight. At 10°C, the SFC of the oil will preferably be less than 30%, more preferably less than 25%, even more preferably less than 20% by weight.

Advantageously, the high oleic palm oils of the present invention will have a reduced saturated fatty acid (SAFA) content, that is a preferred SAFA content of 45% by weight or less. According to certain embodiments, the SAFA content will be 40% or less, preferably 35% or less by weight. For instance, the SAFA content may be 30% or less. Expressed alternatively, the SAFA content may be 20-35% by weight, preferably 25-35% by weight.

A further advantage of the high oleic palm oil used according to the present invention is that, in its crude (i.e. unrefined) form, it has a low free fatty acid content. This, in turn, means that the refined oils will have a low diglyceride content. Preferably, the refined high oleic palm oils of the present invention will have a diglyceride content of less than 5% by weight.

Advantageously, a low diglyceride content (together with careful processing) will lead to the oils used in accordance with the present invention having relatively low levels of 3-monochloropropane-1,2-diol fatty acid esters (3-MCPD esters) and glycidyl esters. Both 3-MCPD esters and glycidyl esters are associated with a possible carcinogenic effect and their intake should therefore be limited. Refined high oleic palm oils of the present invention will preferably have a combined 3-MCPD ester + glycidyl ester content of 2 ppm or less, preferably of 1.5 ppm or less, more preferably of 1 ppm or less. If desired, known techniques to reduce 3-MCPD ester and glycidyl ester levels can be applied to reduce their content further.

The high oleic palm oils used in accordance with the present invention will preferably have a relatively high micronutrient content compared to regular palm oil. The term "micronutrient" as used herein refers to any compound (a) which may have some nutritive or beneficial effect for the consumer or for the stability of the oil composition itself, even when used only in very small quantities, and (b) which is naturally present, even if only in trace amounts, in crude oils (i.e. in non-refined oils). Examples of micronutrients include, but are not limited to, tocopherols and tocotrienols, sterols, sterol-esters, (poly)phenols, squalenes, certain phospholipids, specific triglycerides and diglycerides. The high oleic palm oils of the present invention will preferably have a relatively high tocopherol and tocotrienol content compared to regular palm oil.

Tocopherols and tocotrienols are fat-soluble antioxidants associated with a number of health benefits (neurological development, fertility, etc.) thanks to their Vitamin E activity. They both feature a chromanol ring (with a hydroxyl group that can donate a hydrogen atom to reduce free radicals and a hydrophobic side chain which allows for penetration into biological membranes) and both occur in alpha, beta, gamma and delta forms (determined by the number of methyl groups on their chromanol ring). Tocotrienols differ from their analogous tocopherols by the presence of three double bonds in their hydrophobic side chain. Although the various tocopherols and tocotrienols each have a slightly different biological activity, for ease of reference herein, they will all be referred to under the heading of TOCOLs. Ideally, the refined high oleic palm oil of the present invention will have a TOCOL content about 30-40% higher (by weight) than a regular refined palm oil. According to a possible embodiment, it will have a TOCOL content of between 600 and 1500 ppm, preferably of between 800 and 1200 ppm.

As mentioned above, regular palm oil typically has a distinctive red color due to the presence of high levels of carotenoid. By contrast, the high oleic palm oils of the present invention will preferably have a low carotenoid content. Ideally, the refined oils will have a carotenoid content of less than 1 ppm.

The high oleic palm oils used in accordance with the present invention will be refined. Refining will be performed according to standard practice in the art, using any known methods or techniques to produce an oil suitable for human consumption. For example, the oils may be degummed, bleached and deodorized. The oils may be used as such or they may be modified or fractionated such that the food and/or beverage composition of the invention comprises a high oleic palm oil derivative or fraction.

Palm oil derivatives include, for example, oils which have been physically, chemically and/or enzymatically modified. By way of illustration only, the oils may be interesterified. Palm oil fractions include stearin fractions, olein fractions, mid-fractions and super-stearin or super-olein fractions. According to one possible embodiment, the food and/or beverage compositions of the present invention will comprise a high oleic palm oil olein fraction. Of course, the oil fractions themselves may be subjected to any of the modifications mentioned above and/or may be fractions of oils which have already been modified.

The oils can be used in any food and/or beverage application to replace, in whole or in part, any one or more oil or fat ingredients. Thus, the present invention also provides the use of a refined high oleic palm oil as described above in the preparation of a food and/or beverage composition. These could include, by way of illustration only, bakery products (e.g. cakes, breads, doughs, pastries, batters, etc.), culinary products (e.g. bouillons), frozen products (e.g. pizzas, fries, etc.), dairy products (e.g. cheese products, yogurts, ice-creams, etc.), confectionery products (e.g. chocolates, fillings, coatings, etc.), fat-based products per se (such as margarines, spreads or frying oils), infant formulas or infant nutrition products, nutritional supplements and so on. It is believed that the refined high oleic palm oils of the present invention will be particularly suitable for use in infant formulas, infant nutrition products, margarines, spreads, and frying oils. Thus, the present invention specifically provides infant formulas, infant nutrition products, margarines, spreads, and frying oils comprising a high oleic palm oil (and/or any fractions or derivatives thereof) as defined above.

The oils may be used in combination with one or more additional ingredients. These could include, for instance, additional micronutrients, antioxidants or other oils. When used in combination with one or more other oils, these oils will preferably be selected from other high oleic oils such as high oleic sunflower oil, olein fractions such as palm oil olein or palm oil super-olein and mixtures of two or more thereof. According to one particular embodiment of the present invention, there is provided a frying oil comprising (or even consisting of) the high oleic palm oil described above (and/or any fractions or derivatives thereof) blended with one or more other oils to achieve a desired color, taste, viscosity, etc.

It has been found that the oils of the present invention have improved oxidative stability compared to regular palm oil. As such, they may be used to increase the oxidative stability and/or the shelf life of food and/or beverage compositions to which they are added. In particular, the present invention provides the use of a refined high oleic palm oil, as described above, to increase the oxidative stability of a frying oil.

A frying oil will be understood to be any oil suitable for use in frying food products for human consumption. It will typically be pourable, and preferably substantially liquid at room temperature (that is to say that it will preferably have an overall SFC at 20°C of less than 5% by weight). It may also be referred to as a "cooking oil". Oxidation in frying oils is a particular concern as degradation will occur much more rapidly when exposing an oil to high temperatures in the presence of moisture and air. In particular, if an oil does not have good oxidative stability, there will be a high risk of polar compounds being formed. These are associated with unpleasant taste, odor and residue formation. Because of their relatively high (compared to regular palm oil) content in unsaturated fatty acids, the high oleic palm oils of the present invention were expected to have less oxidative stability, especially when used for frying. Surprisingly, however, the oils of the present invention have been found to have very good oxidative stability and to lead to a reduction in the amount of polar compounds formed when used at high temperatures (e.g. for frying). Thus, the present invention also provides the use of a refined high oleic palm oil to reduce the formation of polar compounds in frying oils.

The high oleic palm oils of the present invention, together with any fractions and/or derivatives thereof, may also be used in non-food or beverage applications such as in animal feed, cosmetics or for technical or industrial applications. For these non-food or beverage applications, the high oleic palm oils may not need to be refined or, at least, may not need to be fully refined and can thus be used in their crude or partially refined forms. They may be used alone or in admixture with one or more other oils, additives and/or components.

Further permutations and embodiments of the present invention will be apparent to a person skilled in the art and are incorporated herein without further description. Certain embodiments are described in further detail in the following, non-limiting, examples.

### EXAMPLES

### Example 1: Oil Comparison (standard palm oil vs. high oleic palm oil)

| | RPO* | RPO* Olein | HOPO** |
|---|---|---|---|
| C12 | 0,2 | 0,2 | 0,1 |
| C14 | 1,0 | 0,9 | 0,4 |
| C16 | 43,5 | 40,8 | 29,7 |
| C18 | 4,6 | 4 | 2,6 |
| C18:1 | 39,5 | 41,8 | 54,1 |
| C18:2 | 10,1 | 10,4 | 11,3 |
| C18:3 | 0,2 | 0,1 | 0,4 |
| Calc IV | 51 | 56 | 67,4 |
| | | | |
| SAFAs | 49.8% | 46% | 33.3% |
| MUFAs | 39.5% | 41.8% | 54.1% |
| PUFAs | 10.2% | 10.5% | 11.7% |
| MUFA:PUFA | 3.9 | 3.9 | 4.6 |
| | | | |
| SFC @ 10°C | 50 | 38,4 | 18,2 |
| SFC @ 20°C | 26,9 | 10,8 | 3,4 |
| SFC @ 25°C | 15,8 | 3,8 | 1,8 |
| SFC @ 30°C | 9 | 0,9 | 0,4 |
| SFC @ 35°C | 4,6 | 0 | 0,1 |
| SFC @ 40°C | 0,5 | 0 | 0 |
| | | | |
| 3-MCPD+glycidyl ester | | 5.0 ppm | 1.8 ppm |

| | | | |
|---|---|---|---|
| *Refined Standard Palm Oil (also known as RBD Palm) **Refined High Oleic Palm Oil from Columbia | | | |

### Example 2: Frying Tests

| | Trial 1 | | Trial 2 | |
|---|---|---|---|---|
| | HOPO | Fry P₄₀₀ (RPO) | HOPO | RPO Olein |
| Sensory Evaluation | No difference in texture or flavor (ns 5%) | | No difference in texture or flavor (ns 5%) | |
| Polar Composts TPC (oil degradation) | 15.00% | 17.50% | 14.50% | 16.00% |
| Peroxide Value (meq/kg) | 1.26 | 1.37 | 4.74 | 4.95 |
| Color (red 5.25) | 17.6 | 20.0 | 11.6 | 17.8 |
| Total fat (g) | 14.2 | 14.0 | 14.3 | 14.1 |
| Saturated fat (g) | 4.1 | 5.7 | 4.1 | 5.6 |
| Trans fat (g) | 0.14 | 0.20 | 0.07 | 0.05 |

As can be seen from these tests, the high oleic palm oils of the present invention lead to reduced polar compound formation compared to regular RBD Palm or Palm Olein. When tested under the same conditions, they have lower peroxide values, less coloration and less saturated fats. And all of this is achieved without any noticeable impact on flavor or texture.

## Claims

1. A food and/or beverage composition comprising a refined high oleic palm oil having a MUFA to PUFA ratio of 4 or more, and/or any fractions or derivatives thereof, together with one or more additional ingredients.

2. A composition according to claim 1, **characterized in that** the palm oil has a MUFA content of 45% by weight or more.

3. A composition according to any one of the preceding claims, **characterized in that** the palm oil has a solid fat content (SFC) at 20°C of less than 10% by weight.

4. A composition according to any one of the preceding claims, **characterized in that** the palm oil has a SAFA level of 45% by weight or less.

5. A composition according to any one of the preceding claims, **characterized in that** the palm oil has a 3-mcpd ester + glycidyl ester content of 2 ppm or less, preferably of 1.5 ppm or less.

6. A composition according to any one of the preceding claims, **characterized in that** the palm oil has a high micronutrient/tocopherol content.

7. A composition according to any one of the preceding claims, **characterized in that** the palm oil has a low carotenoid content.

8. A composition according to any one of the preceding claims, **characterized in that** the palm oil has a diglyceride content of less than 5% by weight.

9. A food and/or feed composition according to any one of the preceding claims selected from the group consisting of: an infant formula, infant nutrition product, a margarine, a spreadable fat, a bakery product, a confectionary product and a frying oil.

10. A frying oil according to any one of claims 1 to 8.

11. The frying oil according to claim 10, wherein the one or more additional ingredients include at least one further high oleic oil such as high oleic sunflower oil.

12. The frying oil according to claim 10 or 11, having improved oxidative stability.

13. Use of a refined high oleic palm oil having a MUFA to PUFA ratio of 4 or more, and/or any fractions or derivatives thereof, in the preparation of a food and/or beverage composition.

14. Use of a refined high oleic palm oil having a MUFA to PUFA ratio of 4 or more, and/or any fractions or derivatives thereof, to increase the oxidative stability and/or shelf life of a frying oil.

15. Use of a refined high oleic palm oil having a MUFA to PUFA ratio of 4 or more, and/or any fractions or derivatives thereof, to reduce the formation of polar compounds during frying.
